# EUROPEAN PATENT APPLICATION

(11) **EP 3 330 682 A1**
(43) Date of publication of application: **06.06.2018**
(21) Application number: 16832663.5
(22) Date of filing: 01.07.2016
(51) Int. Cl.: G01H 17/00

(54) **VIBRATION ANALYSIS DEVICE AND ABNORMALITY DIAGNOSIS SYSTEM**

(30) Priority: 31.07.2015 JP 2015152115
(71) Applicant: NTN Corporation, Osaka-shi, Osaka 550-0003 (JP)
(72) Inventor: HASEBA, Takashi, Kuwana-shi Mie 511-8678 (JP)
(74) Representative: Bockhorni & Kollegen
(86) International application number: PCT/JP2016/069686
(87) International publication number: WO 2017/022384

(57) **Abstract**

Provided are a vibration analyzer and an abnormality diagnosis system capable of listening to vibration data in response to a user's request. The vibration analyzer includes a display, an audio output unit, an input unit, and a controller. The input unit receives an input from the user. The controller displays a graph on the display. The graph is based on data measured by a vibration sensor mounted on a measurement object. The controller outputs a sound from the audio output unit in response to the input to the input unit by the user. The sound corresponds to the graph displayed on the display.

## Description

### TECHNICAL FIELD

The present invention relates to a vibration analyzer and an abnormality diagnosis system including the vibration analyzer.

### BACKGROUND ART

The use of data from a vibration sensor (hereinafter also referred to as "vibration data") mounted on a measurement object to obtain a state of the measurement object has conventionally been known. Japanese Patent Laying-Open No. 2001-39304 (Patent Document 1) discloses a vehicle approach warning apparatus that measures, by a vibration sensor mounted on the rail, vibrations propagated through a rail when a railcar approaches, converts the measured data into a sound, and emits the sound through a speaker, thereby notifying all the workers that the railcar is approaching.

### CITATION LIST

### PATENT DOCUMENT

PTD 1: Japanese Patent Laying-Open No. 2001-39304

### SUMMARY OF INVENTION

### TECHNICAL PROBLEM

A known vibration analyzer uses vibration data to analyze the state of a measurement object. The vibration analyzer may display, for example, a trend graph or a spectrum-like graph on the basis of the data from a vibration sensor.

It is empirically known that when vibrations occur in a measurement object, the cause of the vibrations can thus be identified by listening to the vibration sound. The state of the measurement object can be determined to some extent by converting vibration data into a sound and listening to the sound. For example, if it is difficult to determine the state of the measurement object depending on a graph shape, more effective analysis is enabled by converting vibration data into a sound in response to a user's request and listening to the sound.

The vehicle approach warning apparatus disclosed in Japanese Patent Laying-Open No. 2001-39304 (Patent Document 1) converts vibration data into sound in order to notify the worker that a railcar is approaching. Since the apparatus does not convert vibration data into sound in response to a user's request, the state of a rail is not always analyzed effectively.

An object of the present invention is to provide a vibration analyzer capable of listening to vibration data in response to a user's request.

### SOLUTION TO PROBLEM

In summary, the present invention is a vibration analyzer including a display, an audio output unit, an input unit, and a controller. The input unit receives an input from a user. The controller displays a graph on the display. The graph is based on data measured by a vibration sensor mounted on a measurement object. The controller outputs a sound from the audio output unit in response to the input to the input unit by the user. The sound corresponds to the graph displayed on the display.

Preferably, the controller outputs, from the audio output unit, a sound corresponding to a portion of the graph that has been specified by the input to the input unit by the user.

Preferably, the vibration analyzer further includes a storage unit configured to store data. The controller stores, in the storage unit, information related to the graph that has been input to the input unit by the user. The information is associated with the data corresponding to the graph.

Preferably, the vibration analyzer further includes a communication unit. The controller receives data from an apparatus different from the vibration analyzer via the communication unit.

In summary, another aspect of the present invention is an abnormality diagnosis system including the vibration analyzer described above, a vibration sensor, and a data collector. The vibration sensor is mounted on a measurement object and measures a vibration of the measurement object. The data collector receives data from the vibration sensor and transmits the data to the vibration analyzer.

### ADVANTAGEOUS EFFECTS OF INVENTION

The present invention converts vibration data into a sound in response to a user's request to listen to the vibration data, thus enabling more effective analysis.

### BRIEF DESCRIPTION OF DRAWINGS

Fig. 1 is diagram for illustrating a wind turbine generator 10, which is an example using an abnormality diagnosis system according to an embodiment.
Fig. 2 is a functional block diagram for illustrating a function of the abnormality diagnosis system.
Fig. 3 shows a state in which a trend graph is displayed on a display.
Fig. 4 is a flowchart for illustrating the flow of a process performed in a controller of Fig. 2 when a sound output button GUI is pressed in the state of Fig. 3.
Fig. 5 is a flowchart for illustrating the flow of a process performed in the controller of Fig. 2 when a database registration button GUI is pressed in the state of Fig. 3.
Fig. 6 shows a registration information input dialog.
Fig. 7 is a flowchart for illustrating the flow of a process performed in the controller of Fig. 2 when a frequency analysis button GUI is pressed in the state of Fig. 3.

Fig. 8 shows a state in which a spectrum is displayed on the display.

### DESCRIPTION OF EMBODIMENTS

An embodiment of the present invention will now be described in detail with reference to the drawings. The same or corresponding parts are denoted by the same reference symbols in the drawings, and description thereof will not be repeated.

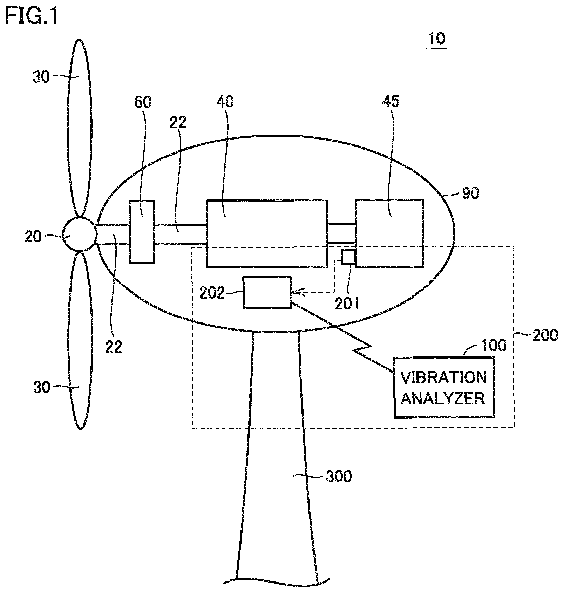

Fig. 1 is a diagram for illustrating a wind turbine generator 10, which is an example that uses an abnormality diagnosis system 200 according to an embodiment. As shown in Fig. 1, wind turbine generator 10 includes a rotor head 20, a main shaft 22, blades 30, a speed-up gear 40, a power generator 45, a main bearing 60, a nacelle 90, and a tower 300.

Abnormality diagnosis system 200 includes a vibration analyzer 100, a vibration sensor 201, and a data collector 202.

Speed-up gear 40, power generator 45, main bearing 60, vibration sensor 201, and data collector 202 are housed in nacelle 90.

Nacelle 90 is provided at the upper end of tower 300. Wind turbine generator 10 is configured to be capable of creating yaw motion for rotating nacelle 90 in accordance with a wind direction with respect to tower 300 secured to the ground. Nacelle 90 is preferably rotated such that a portion thereof close to blade 30 is located windward for an upwind turbine generator and leeward for a downwind turbine generator.

Rotor head 20 is connected to the tip of main shaft 22. A plurality of blades 30 are attached to rotor head 20.

Blades 30, which are provided to the tip of main shaft 22, convert wind power into a rotation torque and transmit the rotation torque to main shaft 22.

Main shaft 22 extends from rotor head 20 into nacelle 90 and is connected to the input shaft of speed-up gear 40 to be rotatably supported by main bearing 60. Main shaft 22 then transmits the rotation torque generated by blades 30 that have received wind power to the input shaft of speed-up gear 40.

Main bearing 60 is fixedly attached in nacelle 90 and rotatably supports main shaft 22. Main bearing 60 is a roller bearing. Main bearing 60 is, for example, a self-centering roller bearing, a conical roller bearing, a cylindrical roller bearing, a ball bearing, or any other bearing. These bearings may be of a single row or double rows.

Speed-up gear 40 is provided between main shaft 22 and power generator 45, and increases the rotation speed of main shaft 22 and outputs it to power generator 45. In one example, speed-up gear 40 is composed of a gear speed-up mechanism including a planetary gear, an intermediate shaft, a high-speed shaft, and the like. Note that although not shown in the figure, speed-up gear 40 is also internally provided with a plurality of bearings that rotatably support a plurality of shafts.

Generator 45 is connected to the output shaft of speed-up gear 40 and generates electric power by the rotation torque received from speed-up gear 40. Power generator 45 is, for example, an induction power generator. Note that power generator 45 is also internally provided with a bearing that rotataly supports a rotor.

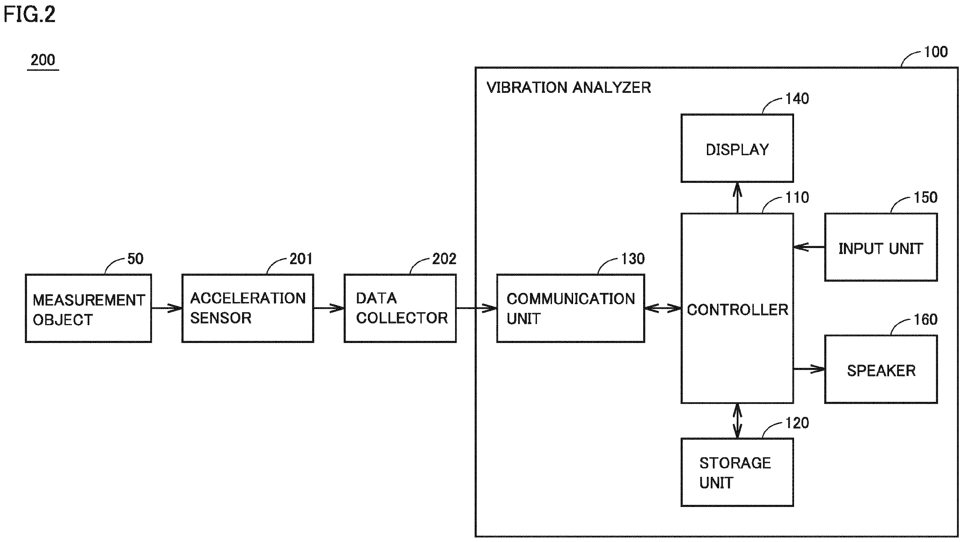

Fig. 2 is a functional block diagram for illustrating the function of abnormality diagnosis system 200. As shown in Fig. 2, abnormality diagnosis system 200 includes vibration analyzer 100, vibration sensor 201, and data collector 202.

Vibration sensor 201 includes, for example, an acceleration sensor. Vibration sensor 201 is mounted on a measurement object 50. Vibration sensor 201 outputs the measured data to data collector 202.

Data collector 202 outputs the data received from vibration sensor 201 to vibration analyzer 100 wirelessly or by wire.

Vibration analyzer 100 includes a controller 110, a storage unit 120, a communication unit 130, a display 140, an input unit 150, and a speaker 160.

Controller 110 controls vibration analyzer 100 in an integrated manner. Controller 110 includes a central processing unit (CPU) and a storage element, which are not shown in the figure. The storage element is, for example, a static random access memory (SRAM) or a dynamic random access memory (DRAM).

Storage unit 120 stores an operating system (OS) read and executed by controller 110, various application programs (e.g., vibration analysis software), and various types of data (e.g., vibration data) used by such programs. Storage unit 120 can include, for example, a flash memory that is a non-volatile semiconductor memory or a hard disk drive (HDD) that is a storage device.

Communication unit 130 receives vibration data from data collector 202 wirelessly or by wire and outputs it to controller 110. Controller 110 stores the vibration data received from communication unit 130 in storage unit 120.

Display 140 shows a display on the basis of a signal received from controller 110. For example, controller 110 executes vibration analysis software to read vibration data from storage unit 120, and displays a trend graph or spectrum-like graph on display 140 on the basis of the vibration data. Display 140 is, for example, a liquid crystal display, a plasma display, an organic EL display, or any other display.

Input unit 150 receives an input from a user and transmits a signal based on the input to controller 110. The user can provide an input to, for example, an application such as vibration analysis software through input unit 150.

It is empirically known that when vibrations occur in measurement object 50, the cause of the vibrations can be identified by listening to the vibration sound. The state of measurement object 50 may be determined to some extent by converting the vibration data into a sound and listening to the sound. Thus, if it is difficult to determine the state of measurement object 50 depending on a graph shape, more effective analysis is enabled by converting vibration data into a sound in response to a user's request and listening to the sound.

Vibration analyzer 100 according to the embodiment thus converts vibration data corresponding to a graph included in a range specified by the user into sound data and reproduces it from speaker 160.

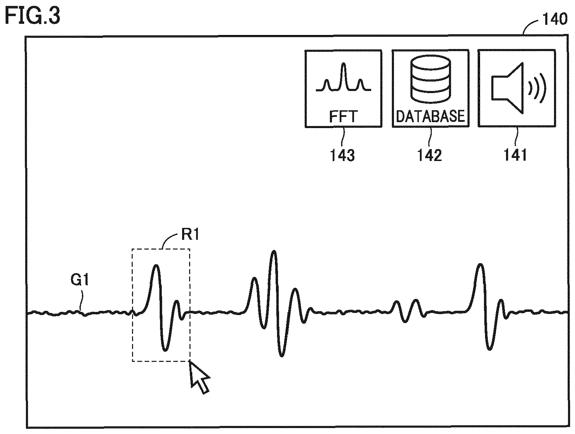

Fig. 3 shows a state in which a trend graph G1 is displayed on display 140. A sound output button graphical user interface (GUI) 141, a database registration button GUI 142, and a frequency analysis (FFT analysis) button GUI 143 are displayed at the upper right of display 140. The respective button GUIs perform sound output, database registration, and frequency analysis for the vibration data corresponding to a portion of trend graph G1 that is included in the range specified by the user. In Fig. 3, a range R1 is specified by the user.

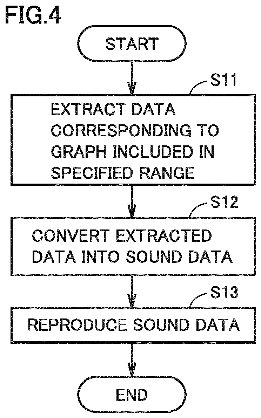

Fig. 4 is a flowchart for illustrating the flow of a process performed in controller 110 of Fig. 2 when sound output button GUI 141 is pressed in the state of Fig. 3. As shown in Fig. 4, at step S11, controller 110 extracts data corresponding to the graph included in range R1, and then, moves the process to step S12. At step S12, controller 110 converts the data extracted at step S11 into sound data, and then, moves the process to step S13. Controller 110 reproduces the sound data from speaker 160 at step S13, and then, ends the process. The sound data may be reproduced on repeat.

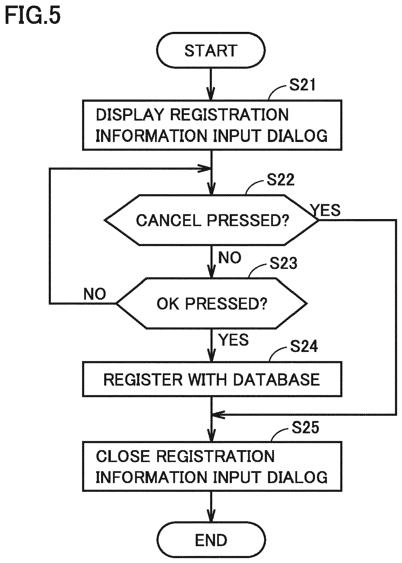

Fig. 5 is a flowchart for illustrating the flow of a process performed by controller 110 of Fig. 2 when database registration button GUI 142 is pressed in the state of Fig. 3. As shown in Fig. 5, controller 110 displays a registration information input dialog on display 140 at step S21, and then, moves the process to step S22.

At step S22, controller 110 determines whether a cancel button GUI of the registration information input dialog has been pressed. If the cancel button GUI has been pressed (YES in S22), controller 110 moves the process to step S25. At step S25, controller 110 closes the registration information input dialog to end the process.

If the cancel button GUI has not been pressed (NO in S22), controller 110 moves the process to step S23. At step S23, controller 110 determines whether an OK button GUI has been pressed. If the OK button GUI has not been pressed (NO in S23), controller 110 returns the process to step S22. If the OK button GUI has been pressed (YES in S23), controller 110 moves the process to step S24.

At step S24, controller 110 registers the information input through the registration information input dialog with a database of storage unit 120 while associating the information with the vibration data corresponding to trend graph G1 which is shown in Fig. 3, and then, moves the process to step S25. At step S25, controller 110 closes the registration information input dialog to end the process.

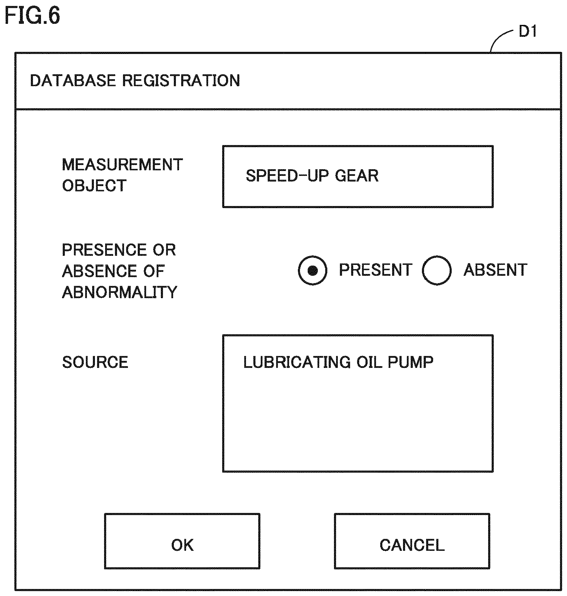

Fig. 6 shows a registration information input dialog D1. Registration information input dialog D1 is displayed at step S21 of Fig. 5. As shown in Fig. 6, the measurement object, the presence or absence of an abnormality, and the source of vibrations can be registered in registration information input dialog D1. Registration information input dialog D1 displayed in Fig. 6 is merely an example, and the information that can be registered with a database is not limited to the measurement object, the presence or absence of an abnormality, and the source of sound.

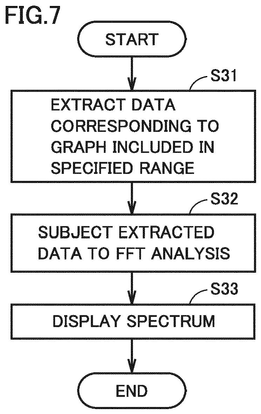

Fig. 7 is a flowchart for illustrating the flow of a process performed in controller 110 of Fig. 2 when frequency analysis button GUI 143 has been pressed in the state of Fig. 3. As shown in Fig. 7, at step S31, controller 110 extracts data corresponding to a graph included in range R1, and then, moves the process to step S32. At step S32, controller 110 subjects the data extracted at step S31 to FFT analysis, and then, moves the process to step S33. At step S33, controller 110 displays the result of the FFT analysis on display 140 as a spectrum, and then, ends the process.

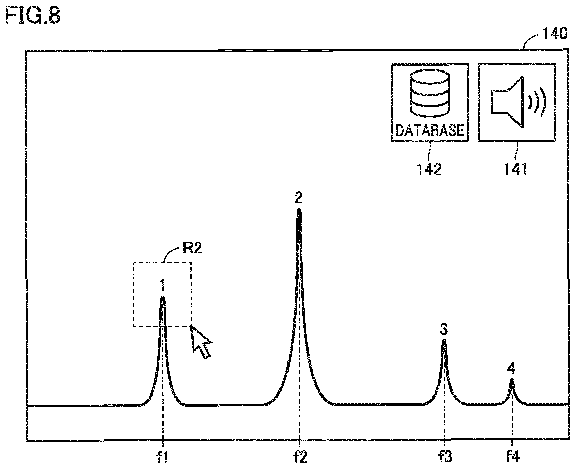

Fig. 8 shows a state in which a spectrum G2 is displayed on display 140. As shown in Fig. 8, a sound output button graphical user interface (GUI) 141 and a database registration button GUI 142 are displayed at the upper right of display 140. In Fig. 8, peaks PI to P4 are shown, and frequencies f1 to f4 corresponding to the

respective peaks are shown. In Fig. 8, a range R2 is specified by the user. Range R2 includes peak PI. When sound output button GUI 141 or database registration button GUI 142 is pressed in this state, data corresponding to range R2 specified by the user is extracted through filtering or the like, and the respective processes shown in Figs. 4 and 5 are performed.

As described above, vibration analyzer 100 according to the embodiment can convert vibration data into sound in response to a user's request to listen to the vibration data. A more effective analysis is thus enabled.

In the embodiment, the information on vibration data can be registered with a database. As a result, the user's determination about vibration data, that has been output as a sound, can be accumulated in the database, thus allowing another user to use this information. For example, if vibration data having a shape similar to the shape of the graph shown by vibration analysis software is registered with a database, the source of vibrations data to be analyzed and the presence or absence of an abnormality can be predicted.

Moreover, a portion which has been determined to be unnecessary for vibration analysis through sound output is removed from the vibration data, thus improving the accuracy of a subsequent analysis.

The embodiment has described the case in which the measurement object for the abnormality diagnosis system is a wind turbine generator. Alternatively, the measurement object is not limited to the wind turbine generator. The measurement object may be any type of measurement object whose abnormality is diagnosed by a vibration sensor mounted on the measurement object. The measurement object can be, for example, a water supply and drainage system, compressor, stone crusher equipment, papermaking equipment, or steel equipment.

The vibration sensor is not limited to those including an acceleration sensor and may be any type of sensor capable of measuring vibrations, such as a speed sensor or a contactless deflection sensor.

It should be understood that the embodiment disclosed herein has been described for the purpose of illustration only and in a non-restrictive manner in any respect. The scope of the present invention is defined by the terms of the claims, rather than the description above, and is intended to include any modifications within the meaning and scope equivalent to the terms of the claims.

### REFERENCE SIGNS LIST

10 wind turbine generator, 20 rotor head, 22 main shaft, 30 blade, 40 speed-up gear, 45 power generator, 50 measurement object, 60 main bearing, 90 nacelle, 100 vibration analyzer, 110 controller, 120 storage unit, 130 communication unit, 140 display, 150 input unit, 160 speaker, 200 abnormality diagnosis system, 201 vibration sensor, 202 data collector, 300 tower.

## Claims

1. A vibration analyzer comprising:
a display;
an audio output unit;
an input unit configured to receive an input from a user; and
a controller configured to display, on the display, a graph based on data measured by a vibration sensor mounted on a measurement object,
the controller being configured to output a sound from the audio output unit in response to the input to the input unit by the user, the sound corresponding to the graph displayed on the display.

2. The vibration analyzer according to claim 1, wherein the controller is configured to output, from the audio output unit, a sound corresponding to a portion of the graph that has been specified by the input to the input unit by the user.

3. The vibration analyzer according to claim 1, further comprising a storage unit configured to store the data,
wherein the controller is configured to store, in the storage unit, information related to the graph that has been input to the input unit by the user, the information being associated with the data corresponding to the graph.

4. The vibration analyzer according to any one of claims 1 to 3, further comprising a communication unit,
wherein the controller is configured to receive the data from an apparatus different from the vibration analyzer via the communication unit.

5. An abnormality diagnosis system comprising:
a vibration analyzer according to claim 4;
a vibration sensor mounted on a measurement object and configured to measure vibrations of the measurement object; and
a data collector configured to receive data from the vibration sensor and transmit the data to the vibration analyzer.
